# EUROPEAN PATENT APPLICATION

(11) **EP 2 648 151 A1**
(43) Date of publication of application: **09.10.2013**
(21) Application number: 13161382.0
(22) Date of filing: 27.03.2013
(51) Int. Cl.: G06Q 30/02

(54) **Method and system for the real-time collection of a feedback from the audience of a television or radio show**

(30) Priority: 05.04.2012 IT RM20120142
(71) Applicant: X2tv S.r.l., 09123 Cagliari (IT)
(72) Inventor: Recco, Giampiero, I- 09123 Cagliari (IT)
(74) Representative: Carangelo, Pierluigi

(57) **Abstract**

A method (1) is described for the real-time collection of a feedback from the audience of a television or radio show in the form of a preference or a vote or an answer to a question, the feedback collection being synchronous or substantially synchronous with the television or radio show.

The method comprises the steps of:
- providing (2) at least one application program executable by each of a plurality of client devices (22) of the users of the audience, the client devices (22) being provided with a voice recognition and/or recording system which may be enabled/disabled in a controlled manner, the application program being configured so as to interface with the voice recognition and/or recording system for controlling the enabled/disabled status thereof;
- providing (3) a notification server device (24) configured so as to interface with a plurality of said client devices (22) through said application program;
- sending (6) a feedback collection start notification signal to the client devices (22), through said notification server (24) and synchronised with said broadcast, the feedback collection start notification signal being configured so that in response to said signal, the application program enables the voice recognition and/or recording system for allowing users from the audience to give said feedback by voice, and acquires information correlated to said feedback given by voice;
- providing (7) a feedback collection server configured for receiving respective signals carrying the information acquired from said plurality of client devices (22) through said application program.

## Description

The present disclosure relates to a method and a system for the real-time collection of a feedback from the audience of a television or radio show.

Methods and systems are known for collecting responses or preferences from the audience of a television or radio show which provide for the presenter or the anchorman of a show to ask a question to the audience with possible answers or ask to give a vote or a preference, giving a phone number to the audience during the same show.

According to said methods or systems of the prior art, people in the audience who want to interact with the show can make a phone call to said phone number and give their answer or simply give a vote or a preference. This may be carried out offline, for example at the end of the show, or during a predetermined time interval during the show, limited between a collection start time and a collection end time told to the audience by the presenter or anchorman.

In the most evolved methods or systems, the audience's phone calls are automatically managed by suitable servers which for example are capable of collecting the audience's responses through voice recognition techniques and/or through the recognition of the digits entered by the audience through the associated phones (for example "1"=YES, "0"=NO or "1"= vote given to the "red team", "0"= vote given to the "black team").

Methods and systems are also known for collecting responses or preferences from the audience of a television or radio show which provide for the possibility for the audience, in addition or as an alternative to the phone channel, to give their responses/preferences through the Internet channel. To this end, said collecting methods and systems of the prior art must provide a portal associated to the television/radio show whereto the audience can connect via a personal computer, a smartphone or a tablet pc and including one or more pages dedicated to the collection of responses and preferences, for example by providing an input via keyboard, mouse or touchscreen.

While said methods and systems of the prior art are widely used, they exhibit some limits and drawbacks.

In fact, said methods and systems of the prior art require a particular will effort by the audience since it is necessary to store the phone number or the web address and actively establish a phone or Internet connection. In some sense this may discourage the audience, especially lazy ones, so that the interaction only occurs with more motivated audience or that is more skilled in the Internet or phone voting systems.

Moreover, said methods and systems, either based on the phone channel or on the Internet channel are particularly subject to being attacked by servers or hackers or by particularly proactive users who can send a large number of polarised responses in a short time in order to influence the final result of the survey or of the televote beyond the expectations.

Finally, said methods and systems may be improved in relation to the actual synchronisation with the television or radio show.

The need of having a collection method and system which do not exhibit the drawbacks described above with reference to the prior art is therefore felt.

The object of the present disclosure is to provide a method and a system that allow the above need to be met.

Such object is achieved by a method as defined in general in the annexed first claim in the most general form thereof and in the dependent claims in some particular embodiments.

The invention shall be better understood from the following detailed description of embodiments thereof, made by way of an example and therefore in no way limiting with reference to the annexed drawings, wherein:
- figure 1 shows a flow chart of an example of a method for the real-time collection of a feedback from the audience of a television or radio show; and
- figure 2 shows an exemplary and non limiting functional block diagram of a telecommunication system for the real-time collection of a feedback from the audience of a television or radio show.

In the figures, elements which are equivalent or similar are indicated by the same reference numerals.

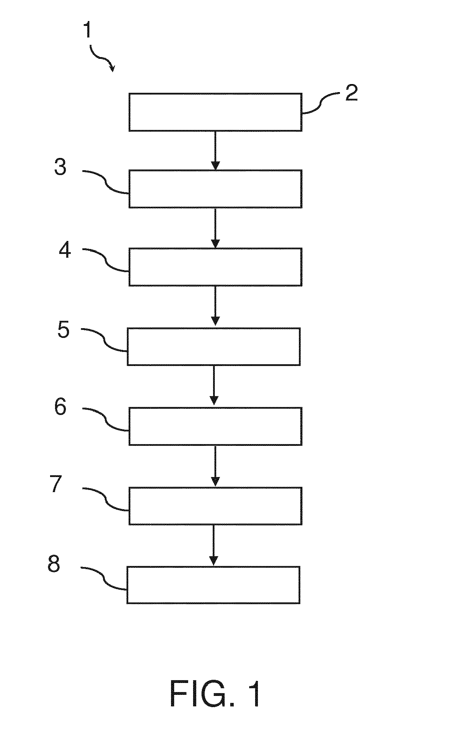

With reference to figure 1, reference numeral 1 globally indicates the flow chart of a method for the real-time collection of a feedback from the audience of a television or radio show given in the form of a preference or a vote of an answer to a question. Said collection of the feedback is synchronous or substantially synchronous with the television or radio show.

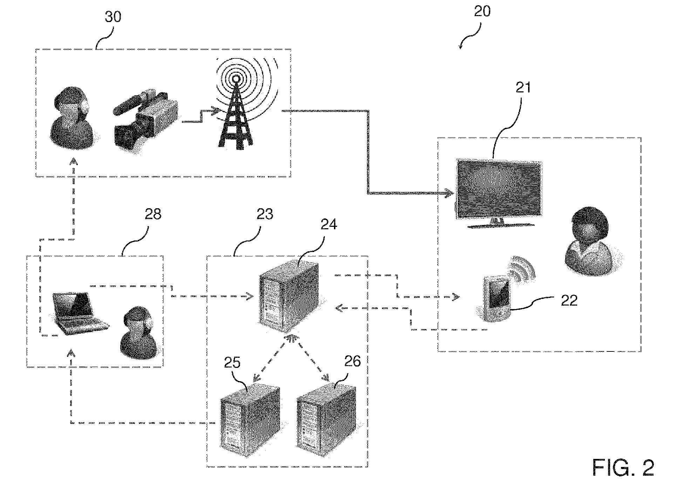

Figure 2 shows the exemplary functional block diagram of a telecommunication system 20 wherethrough the method of figure 1 may be implemented. In the particular example shown in figure 2 and which shall be described hereinafter, without thereby introducing any limitation, said show is a television show in the form of a live or pre-recorded television show receivable and viewable through a television reception device 21. Such television reception device 21 for example is in the form of a TV, for example an LCD or plasma or LED TV comprising or connected to a digital decoder. Said television program is for example made available for broadcasting via a television production/broadcasting system 30, for example suitable for broadcasting said program through ground or satellite digital broadcasting.

In figure 2, reference numeral 22 generally indicates a "client" device, i.e. the reception/transmission device wherethrough a user in the audience can give a feedback.

According to an embodiment, the client device 22 is a personal communication mobile device provided with a microphone and also preferably with a graphical display interface. The client device 22 for example is a smartphone or a tablet pc.

The client device 22 is suitable for being programmed in a customisable manner, for example via applications (such as for example the so-called "apps"). The client device 22 is provided with an interface for the connection to the Internet or to another data network (such as for example WiFi, 2G, 3G), preferably of the wireless type.

According to an alternative embodiment, said client device 22 is built in the same television reception device 21, this being for example in the form of a smart-TV, provided with a microphone and suitable for being programmed in a customisable manner, for example through applications (such as for example the so-called apps). Also in this case, the client device 22 is provided with an interface for the connection to the Internet or to another data network. If the show is a radio show, the client may be built in a radio receiver.

According to a further embodiment, said client device 22 is a dedicated device for example in the form of a new-generation multifunctional remote control provided with a microphone and with an interface for the connection to the Internet or to another data network.

Irrespective of the specific embodiment, said client device 22 is provided with data storage and processing resources and is suitable for storing and executing an application program. Said client device 22 is further provided with a voice recognition and/or recording system which may be enabled/disabled in a controlled manner. The application program is configured so as to interface with the voice recognition and/or recording system of the client device 22 to check the enabled/disabled status thereof.

In figure 2, reference numeral 23 generally indicates a "back end system", i.e. the entity, or set of hardware/software components which, cooperating with the client device 22 through said application program, allows method 1 of collecting the feedback from the audience to be implemented.

The back end system 23 comprises a notification server 24 configured so as to interface with a plurality of client devices 22 through said application program. It is clear that said back end server 23 is a hardware/software system that can be implemented without distinction either in a single processor whereon different software modules are executed, or in a distributed set of processors interconnected to each other, each intended to carry out one or more functions.

The notification server 24 is configured for sending a feedback collection start notification signal to the client devices 22, the notification signal being configured so that in response to said notification signal, the application program executed onboard of the client device 22 activates the voice recognition and/or recording system of the client device 22 for allowing the users of the audience to give said feedback by voice and accordingly acquires information correlated to said feedback given by voice by the users. According to an embodiment said activation of the voice recognition and/or recording system is automatic, that it to say it occurs directly as a consequence of the reception of the notification signal.

The back end system 23 comprises a feedback collection server 24 configured for receiving respective signals carrying the information acquired from a plurality of client devices 22 through said application program onboard thereof. In the particular example shown in figure 2, the feedback collection server 24 is represented as physically built in the notification server 24, even though in a practical implementation the feedback collection server may be made as an independent hardware/software system or separate from the notification server device 24.

According to an embodiment, the back end system 23 comprises an analysis server 25 configured for analysing the information acquired, for example:
- by counting the information acquired, for example counting the responses and/or the preferences and/or votes given; and/or
- by statistically analysing such data; and/or
- by organising the counting results; and/or
- by making a statistical analysis for presenting the results to the public.

According to a further embodiment, the back end system 23 further comprises a speech to text conversion server 26, provided if for example such conversion is not directly carried out by the client devices 22 (for example, being carried out by the application program onboard thereof) and thus if the client devices 22 send a feedback to the feedback collection server 24 in the form of digital samples of an audio signal acquired through a system for recording/acquiring a voice signal in audio band.

According to an embodiment, the telecommunication system 20 further comprises an editing server 28 wherethrough an operator can control the notification server 24 so that the feedback collection start notification signals sent thereby are synchronous or substantially synchronous with the television show being broadcast.

The editing server 28 may interface with the analysis server 25 and with the television production/broadcasting system 30 so that the results obtained from the collection of the feedback from the audience are shown during the same television show being broadcast.

With reference to figure 1, the different steps of method 1 shall mainly be described hereinafter and further features of the components of system 20 (figure 2) shall be described as they are mentioned in the description of the steps of method 1.

Method 1 comprises a step 2 of providing at least one application program executable by the client devices 22 of the users of the audience, the client devices 22 being provided with a voice recognition and/or recording system which may be enabled/disabled in a controlled manner, the application program being configured so as to interface with the voice recognition and/or recording system for controlling the enabled/disabled status thereof.

Method 1 further comprises a step 3 of providing a notification server device 24 configured so as to interface with a plurality of client devices 22 through the application program onboard thereof.

Method 1 further comprises a step of sending 6 a feedback collection start notification signal to the client devices 22, through said notification server 24 and synchronised with said broadcast, the feedback collection start notification signal being configured so that in response to said signal, the application program onboard of the client device enables the voice recognition and/or recording system for allowing users from the audience to give said feedback by voice, and acquires information correlated to the feedback given by voice.

Method 1 further comprises a step of providing 7 a feedback collection server 24 configured for receiving respective signals carrying the information acquired from the plurality of client devices 22 through said application program.

According to an embodiment, subsequent to said enabling of the voice recognition and/or recording system, the application program is such as to disable the voice recognition and/or recording system after a time interval of predetermined time, optionally if it has not detected the user's voice within such interval. For example, the same notification signal sent to the client devices 22 contains information for setting said predetermined time.

According to an embodiment, the voice recognition and/or recording system of the client devices 22 includes a processing module for speech to text conversion and the information acquired by the client devices 22 results from a speech to text conversion carried out at said client devices 22. It is possible to provide for the notification server 24 to be such as to send information about the possible responses or preferences or votes to the client devices 22 through the notification signal. In this case, the information acquired is generated by the application program by selecting one of the possible responses or preferences or votes starting from said text obtained from the speech to text conversion.

In an alternative embodiment, the voice recognition and/or recording system of the client devices 22 includes a voice recording module and the feedback information sent to the feedback collection server 24 contains digital samples of an audio signal generated in output from the voice recording module. In this case, the speech to text conversion is carried out for example by a speech to text conversion server 26 operatively connected to or included in the feedback collection server 24.

According to an embodiment, the application program onboard of the client devices 22 is capable of interfacing with a social network and the notification signal allows the interfacing of the application program with said social network to be enabled for execution subsequent to a voice command of predetermined types of actions that may be carried out on said social network.

According to an embodiment, the client device 22 comprises a graphical interface and the notification signal sent to the notification server 24 comprises data adapted to display useful information on said graphical interface for guiding the user in giving his/her feedback, such as for example a question and the possible answers.

According to an embodiment, the method comprises a step of receiving 4 a service access request at the notification server 24 from the client devices 22 and wherein the notification signal is sent to client devices 22 wherefrom said service access request has started. In this case, method 1 may comprise a step of establishing 5 a network connection, for example to the Internet, between the notification server 24 and each of the client devices 22. In this way, the users in the audience can select whether to receive the feedback collection start notification signals through their client device 22, so as to use the service that allows the users to give their feedback. The access request may for example be selective, so that the user may select to receive from the notification server 24 feedback collection start notifications related to a specific show broadcast on a specific television channel that is of interest to the user.

According to an embodiment, method 1 comprises a step 8 of providing an analysis server 25 and analysing the information acquired through said analysis server:
- by counting the information acquired, for example counting the responses and/or the preferences and/or votes given; and/or
- by statistically analysing the information acquired; and/or
- by organising the counting results; and/or
- by making a statistical analysis for presenting the results to the public.

With reference to figure 2, a particular example of operation of system 20 shall be briefly explained hereinafter. It will be assumed that the show being broadcast is a television entertainment show, for example a live show, and that the client device 22 is a mobile phone, for example a smartphone, provided with a voice recognition system.

In operation, a user watches a television entertainment show being broadcast by tuning on a television channel, for example by a common television receiver 21 provided with a built in decoder and with a display. A user that wants to give his/her feedback can start the application program on his/her client device 22, for example having first downloaded it from a website, and for example select from a list of channels the channel corresponding to the television channel where the television show is being broadcast. In response to such selection, the client device 22 is configured so as to send a service access request to the notification server 24. Such access request allows the notification server 24 to be notified that the user of the client device 22 wants to receive the feedback collection start notification signal in real time and in a synchronised or substantially synchronised manner, relative to the show broadcast.

During the show, an anchorman of said show can ask the audience to give a feedback, for example to give a vote or a preference or to answer a question. At the same time, at the editing server 22 an operator, for example by a suitable software that allows the editing server 22 and the notification server 24 to be interfaced with each other, controls the notification server 24 so that it sends a feedback collection start notification signal to the connected client devices 22. Through the editing server 22, the operator can send useful information for collecting the feedback to the notification server 24, such as for example a question with the possible answers, a list of participants to a competition or a contest correlated to the show and which are subject to receiving a vote, an indication of the possible votes, a limit time within which a user can give his/her feedback by voice.

The reception of the notification signal at the client device 22, thanks to the application program being executed, allows the voice recognition and/or recording system to be automatically enabled (optionally graphically or acoustically notifying such enabling to the user). In this way, the user can readily and simply give his/her feedback by voice. Such feedback by voice may be converted by the client device 22 into a feedback signal containing text information or digital samples of an audio signal. Said feedback signal is transmitted by the same client device 22 (for example again by the application program) to the feedback collection server 24 for optionally being processed by servers 25 and 26 described above and sent to the editing server 22 whereat it is possible to edit/synthesise the global results of the feedbacks acquired from the audience so that they are for example presented by the anchorman at the end of the feedback collection during the same television show.

As is clear from what described above, the intended objects are fully achieved with a method and a system of the type described above.

The method and the system described above, in fact, allow the interactions between a television or radio show and the users of the audience to be synchronised so as to create the perception of a customised conversation between the television or radio show (for example between the anchorman) and each member of the audience. The feedback may be provided by a user in a particularly quick, convenient and intuitive manner, since this feedback is given by voice and it is not necessary for the user to specifically enable the interface and/or voice recognition system since it is automatically enabled by the application program upon the reception of the feedback collection start notification signal.

The method and the system described above allow the users' interactions to be synchronised on a restricted and well delimited context, thereby ensuring the possibility of grouping, during the analysis, the possible interactions in few well defined messages/groups. For example, during a television or radio show, the anchorman may for example quickly read/know the users' answers to a precise question and so that a sort of remote "conversation" with the same users may then be carried on. It should be noted that is in fact possible to aggregate and count the audience's responses in real time, allowing an anchorman to evaluate and take them into consideration live, thereby giving rise to a sort of conversation.

If the speech to text conversion is carried out onboard of the client device 22, the method and the system described above further allow a higher level of protection of the users' privacy to be obtained since the responses may be mapped (directly by the client device 22) on multiple responses without exposing the entire conversation optionally captured by the voice recognition/recording system to the back-end system 23.

Moreover, since the feedback is given through an application program onboard of a specific client device 22 that communicates with the back end system 23, it is possible to provide for a certain control/authentication level, thereby preventing multiple responses from being given through a same client device 22, for example with the intention of influencing the final result of the feedback beyond the expectations.

Moreover, it should be noted that the voice recognition or recording system is automatically remotely enabled only when needed and then disabled and therefore it can remain generally available to the user for the common features optionally provided in the client device 22.

It is clear that a man skilled in the art may make several changes and variations to a method and a system of the type described above in order to meet specific and incidental needs, all falling within the scope of protection of the invention as defined by the following claims.

## Claims

1. Method (1) for the real-time collection of a feedback from the audience of a television or radio show in the form of a preference or a vote or an answer to a question, the feedback collection being synchronous or substantially synchronous with the television or radio show, the method comprising the steps of:
- providing (2) at least one application program executable by each of a plurality of client devices (22) of the users of the audience, the client devices (22) being provided with a voice recognition and/or recording system which may be enabled/disabled in a controlled manner, the application program being configured so as to interface with the voice recognition and/or recording system for controlling the enabled/disabled status thereof;
- providing (3) a notification server device (24) configured so as to interface with a plurality of said client devices (22) through said application program;
- sending (6) a feedback collection start notification signal to the client devices (22), through said notification server (24) and synchronised with said broadcast, the feedback collection start notification signal being configured so that in response to said signal, the application program enables the voice recognition and/or recording system for allowing users from the audience to give said feedback by voice, and acquires information correlated to said feedback given by voice;
- providing (7) a feedback collection server configured for receiving respective signals carrying the information acquired from said plurality of client devices (22) through said application program.

2. Method (1) for the real-time collection of a feedback according to claim 1, wherein subsequent to said enabling, the application program is such as to disable the voice recognition and/or recording interface after a time interval of predetermined time.

3. Method (1) according to claim 2, wherein the notification signal contains information for setting said predefined time.

4. Method (1) according to any one of the previous claims, wherein the voice recognition and/or recording system includes a processing module for speech to text conversion and wherein said acquired information results from a speech to text conversion carried out at the client devices (22).

5. Method (1) according to claim 4, wherein the notification server (24) is such as to send information about the possible responses or preferences or votes to the client devices (22) through the notification signal and wherein said acquired information is generated by the application program by selecting one of the possible responses or preferences or votes starting from text.

6. Method (1) according to any one of claims 1 to 3, wherein the voice recognition and/or recording system includes a voice recording module and wherein said feedback information contains digital samples of an audio signal generated in output from the voice recording module.

7. Method (1) according to any one of the previous claims, wherein the application program is capable of interfacing with a social network and wherein the notification signal allows the interfacing of the application program with said social network to be enabled for execution subsequent to a voice command of predetermined types of actions that may be carried out on said social network.

8. Method (1) according to any one of the previous claims, wherein the client device (22) comprises a graphical interface and wherein the notification signal comprises data adapted to display useful information for collecting said feedback on the graphical interface, such as a question and possible answers to said question.

9. Method (1) according to any one of the previous claims, comprising a step of receiving (4) a service access request at the notification server (24) from said client devices and wherein the notification signal is sent to client devices (22) wherefrom said service access request has started.

10. Method (1) according to any one of the previous claims, comprising a step of establishing (5) an Internet connection between said notification server (24) and each of said client devices (22).

11. Method (1) according to any one of the previous claims, further comprising a step (8) of providing an analysis server (25) and of analysing the information acquired through said analysis server (25).

12. Telecommunication system (20) comprising a notification server (24) adapted to carry out a method according to any one of the previous claims.

13. Application program comprising code instructions executable by a client device (22) for interfacing with said notification server (24) in order to carry out a method (1) according to any one of claims 1 to 10.

14. Client device (22) comprising a processor, a memory and code portions directly loadable to the memory and executable by the processor for allowing said client device to execute an application program according to claim 13.

15. Client device (22) according to claim 14, wherein said client device (22) is a smartphone, a tablet PC or a smart-TV (21).

16. Notification server (24) adapted to interface with said client device (22) through said application program for carrying out a method according to any one of claims 1 to 10.
